# EUROPEAN PATENT APPLICATION

(11) **EP 1 531 081 A2**
(43) Date of publication of application: **18.05.2005**
(21) Application number: 04024627.4
(22) Date of filing: 15.10.2004
(51) Int. Cl.: B60N 2/48

(54) **Headrest apparatus**

(30) Priority: 13.11.2003 KR 2003080071
(71) Applicant: HAN IL E HWA Co., Ltd., Guro-gu, Seoul (KR)
(72) Inventor: Lee, Sang-bok, Asan-si Chungcheongnam-do (KR)
(74) Representative: Einsel, Martin

(57) **Abstract**

The present invention relates to a a headrest apparatus (7) comprising: a headrest (10); a headrest support (15) to support the headrest; a backrest frame (20) to form a backrest of a seat; a guide bracket (30) connecting the headrest support (15) to the backrest frame (20) and comprising a guide part to guide a relative rotation of the headrest support to the backrest frame and a rotation restricting part to restrict the relative rotation of the headrest support to the backrest frame; and a hinge shaft (40) to rotatably connect the backrest frame to the guide bracket. Thus, the present invention provides the headrest apparatus for automobile that can be folded easily without being detached from the seat.

## Description

### CROSS-REFERENCE TO RELATED APPLICATIONS

This application claims the benefit of Korean Patent Application No. 2003-80071, filed November 13, 2003, in the Korean Intellectual Property Office, the disclosure of which is incorporated herein by reference.

### BACKGROUND OF THE INVENTION

### Field of the Invention

The present invention relates to a headrest apparatus for automobile, and more particularly to a headrest apparatus that can be folded easily without being detached from a seat.

### Description of the Related Art

A headrest apparatus for automobile is used to support heads of passengers to protect them from wounds by accidents.

A conventional headrest apparatus is provided at an upper part of a seat and the height thereof is adjustable in an up-and-down direction.

However, in the conventional headrest apparatus, a rotation radius from a rotation axis of the seat to an upper end of the headrest apparatus is too long. Thus, a user should detach the headrest apparatus to fold the seat in a frontward or a backward direction, which brings a inconvenience to the user.

To solve this problem, the present invention provides a convenient headrest apparatus for automobile that can be folded easily without being detached from the seat.

### SUMMARY OF THE INVENTION

Accordingly, it is an aspect of the present invention to provide a headrest apparatus for automobile that can be folded easily without being detached from the seat.

The foregoing and/or other aspects of the present invention are achieved by providing a headrest apparatus comprising: a headrest; a headrest support to support the headrest; a backrest frame to form a backrest of a seat; a guide bracket connecting the headrest support to the backrest frame and comprising a guide part to guide a relative rotation of the headrest support to the backrest frame and a rotation restricting part to restrict the relative rotation of the headrest support to the backrest frame; and a hinge shaft to rotatably connect the backrest frame to the guide bracket.

According to an aspect of the invention, the rotation restricting part comprises a stopping hole grooved from a circumferential side of the guide part and a stopping protrusion to form a predetermined angle with respect to the stopping hole and to protrude from another circumferential side of the guide part.

According to an aspect of the invention, the headrest apparatus further comprises a spring to elastically bias the backrest frame with respect to the guide bracket.

According to an aspect of the invention, the headrest apparatus further comprises a bush that is provided in the backrest frame and through which the hinge shaft passes to slidably connect the backrest frame to the hinge shaft.

Additional and/or other aspects and advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the preferred embodiments, taken in conjunction with the accompanying drawings of which:
FIG. 1 is a perspective view of a headrest apparatus for automobile according to an embodiment of the present invention;
FIG. 2 is a perspective view of a guide bracket of FIG. 1;
FIG. 3 is a sectional view, taken along the line III-III of FIG. 1; and
FIGs. 4 and 5 show operations of the headrest apparatus according to the embodiment of the present invention.

### DETAILED DESCRIPTION OF THE PREFERRED EMBODIMENTS

Reference will now be made in detail to the present preferred embodiments of the present invention, examples of which are illustrated in the accompanying drawings, wherein like reference numerals refer to the like elements throughout. The embodiments are described below in order to explain the present invention by referring to the figures.

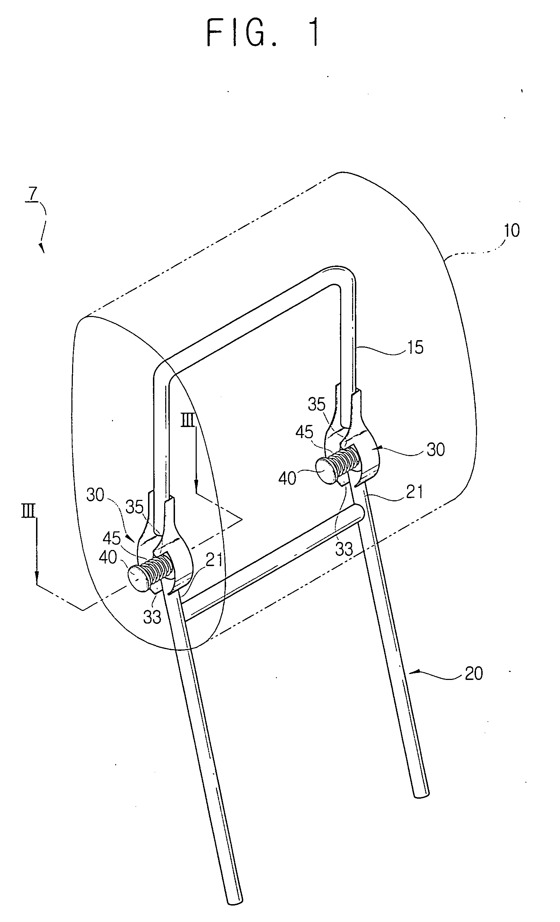

As shown in FIG. 1, a headrest apparatus 7 for automobile according to an embodiment of the present invention comprises a headrest 10, a headrest support 15 to support the headrest 10, a backrest frame 20 to form a backrest of a seat, a guide bracket 30 to connect the headrest support 15 to the backrest frame 20 and to guide and restrict a rotation of the headrest support 15 and the backrest frame 20 about each other and a hinge shaft 40 to rotatably connect the backrest frame 20 to the guide bracket 30.

The headrest 10 is provided at an upper part of the backrest of the seat and supported by the headrest support 15.

The headrest support 15 is of an approximately reverse U shape and has opposite ends each connected to the guide bracket 30. The headrest support 15 may be securely connected to the guide bracket 30 by a welding, a rivet, a bolt and the like.

The backrest frame 20 is of an approximately reverse U shape and comprises a pair of bracket connecting parts 21 protruding toward each of ends of the headrest support 15 at an upper part thereof. The bracket connecting parts 21 of the backrest frame 20 are rotatably connected to the hinge shaft 40 and formed with through holes (not shown) through which the hinge shaft 40 passes. A bush of a ring shape is inserted in the each of the through holes of bracket connecting parts 21 through which the hinge shaft 40 passes to slidably connect the backrest frame 20 to the hinge shaft 40. As an aspect of the present invention, the bush 25 may be a metal bearing, which prolongs a length of lives of the backrest frame 20 and the hinge shaft 40.

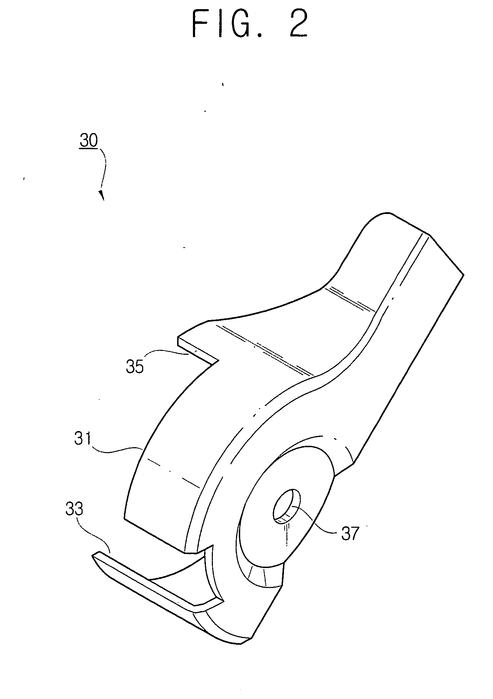

The pair of guide brackets 30 is positioned at opposite sides of the headrest support 15 and the backrest frame 20 and each of the pair of the guide bracket 30 faces each other. As shown in FIG. 2, the guide bracket 30 comprises a guide part 31 to guide the relative rotation of the headrest support 15 to the backrest frame 20 and a rotation restricting part to restrict the relative rotation of the headrest support 15 to the backrest frame 20.

The guide part 31 is provided along a direction of the relative rotation of the headrest support 15 to the backrest frame 20, i.e., a folded direction of the headrest 10 on the backrest frame 20. Thus, the guide part 31 contacts to a side of the backrest frame 20 to guide the rotation of the headrest support 15 with respect to the backrest frame 20 during a folding process of the headrest 10 on the backrest frame 20.

The rotation restricting part to restrict the relative rotation of the headrest support 15 to the backrest frame 20 comprises a stopping hole 33 grooved from a circumferential side of the guide part 31 and a stopping protrusion 35 to protrude from another circumferential side thereof.

In the stopping hole 33 of the guide bracket 30 is partially accommodated the bracket connecting part 21 of the backrest frame 20, which restricts an upward movement of the guide bracket 30. Thus, if the headrest support 15 securely connected to the guide bracket 30 upwardly rotates, the bracket connecting part 21 of the backrest frame 20 is inserted in the stopping hole 33 of the guide bracket 30. Thus, the headrest support 15 keeps not to be folded with respect to the backrest frame 20, i.e., the headrest 10 keeps not to be folded with respect to the backrest frame 20 of the seat.

The stopping protrusion 35 of the guide bracket 30 contacts to the bracket connecting part 21 of the backrest frame 20, which restricts a downward movement of the guide bracket 30. Thus, if the headrest support 15 securely connected to the guide bracket 30 downwardly rotates, the bracket connecting part 21 of the backrest frame 20 contacts to the stopping protrusion 35 of the guide bracket 30. Thus, the headrest support 15 is positioned at a predetermined angle with the backrest frame 20, so that the headrest 10 keeps to be folded with respect to the backrest frame 20.

On the guide bracket 30 is formed a hinge connecting hole 37 to insert an end of the hinge shaft 40.

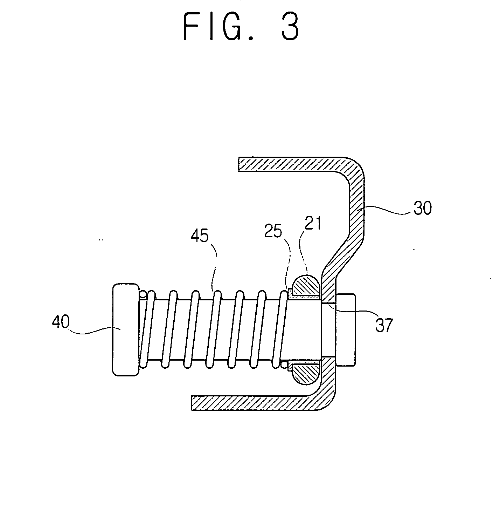

As shown in FIG. 3, the bush 25 inserted in the through hole 37 of the bracket connecting part 21 is rotatably connected to the hinge shaft 40. Along a circumferential surface of the hinge shaft 40 is provided a spring to elastically bias the backrest frame 20 with respect to the guide bracket 30. Thus, the backrest frame 20 and the guide bracket 30 closely contact to each other by the spring 45, which prevents the guide bracket 30 from being separated from the backrest frame 20. Further, when the bracket connecting part 21 of the backrest frame 20 is partially accommodated in the stopping hole 33 of the guide bracket 30 or contacts to the stopping protrusion, the headrest 10 keeps to be stably positioned.

With this configuration, a description of an operation of the headrest apparatus 7 for automobile according to an embodiment of the present invention follows.

When the headrest 10 is not folded, the bracket connecting part 21 of the backrest frame 20 is inserted in the stopping hole 33 of the guide bracket 30 as shown in FIG. 1.

When the headrest 10 is to be folded, the headrest support 15 is moved in a right direction of the hinge shaft 40 of the headrest support 15, so that the bracket connecting part 21 of the backrest frame 20 inserted in the stopping hole 33 of the guide bracket 30 is released from the stopping hole 33.

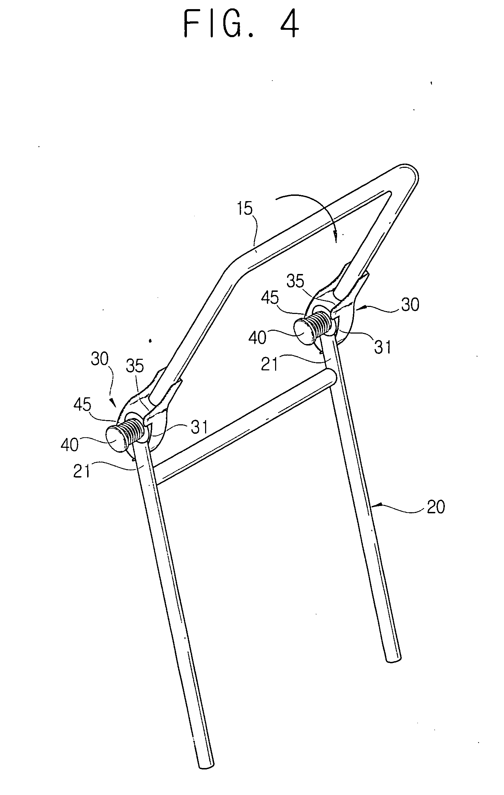

Then, the guide bracket 30 released from the bracket connecting part 21 of the backrest frame 20 is moved downwardly, i.e., in the direction of the arrow shown in FIG. 4. At this time, the guide part 31 of the guide bracket 30 slides on the bracket connecting part 21 of the backrest frame 20 and moves forewardly.

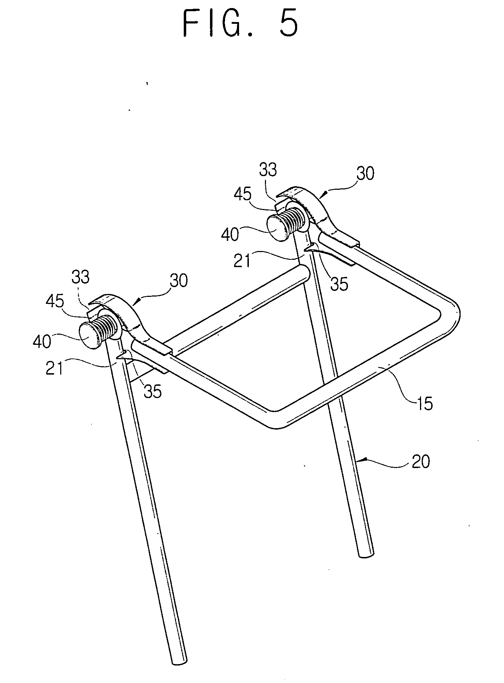

If the guide bracket 30 further rotates downwardly, the stopping protrusion 35 of the guide bracket 30 contacts to the bracket connecting part 21 of the backrest frame 20. At this time, as shown in FIG. 5, the bracket connecting part 21 of the backrest frame 20 closely contacts to the stopping protrusion 35 and the guide part 31 of the guide bracket 30 by the spring 45, so that the guide bracket 30 doesn't separate from the backrest frame 20. Further, the headrest support 15 securely connected to the guide bracket 30 is positioned at a predetermined angle with the backrest frame 20, so that the headrest 10 keeps to be folded with respect to the backrest frame 20 of the seat.

Like this, the present invention provides a guide bracket to connect the headrest support to the backrest frame and to guide and restrict a relative rotation of the headrest support to the backrest frame and the backrest frame is rotatably connected to the guide bracket, so that the headrest can be easily folded without being detached from the seat.

In the embodiment described above, the backrest frame is of an approximately U shape, but not limited thereto. That is, shapes of the backrest frame may be varied as required.

As described above, the present invention provides the headrest apparatus for automobile that can be folded easily without being detached from the seat.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A headrest apparatus comprising:
a headrest;
a headrest support to support the headrest;
a backrest frame to form a backrest of a seat;
a guide bracket connecting the headrest support to the backrest frame and comprising a guide part to guide a relative rotation of the headrest support to the backrest frame and a rotation restricting part to restrict the relative rotation of the headrest support to the backrest frame; and
a hinge shaft to rotatably connect the backrest frame to the guide bracket.

2. The headrest apparatus according to claim 1, wherein the rotation restricting part comprises a stopping hole grooved from a circumferential side of the guide part and a stopping protrusion to form a predetermined angle with respect to the stopping hole and to protrude from another circumferential side of the guide part.

3. The headrest apparatus according to claim 2, further comprising a spring to elastically bias the backrest frame with respect to the guide bracket.

4. The headrest apparatus according to claim 3, further comprising a bush that is provided in the backrest frame and through which the hinge shaft passes to slidably connect the backrest frame to the hinge shaft
